(19) Europäisches Patentamt
European Patent Office
Office européen des brevets

(11) EP 0 982 994 B1

(12) EUROPÄISCHE PATENTSCHRIFT

(45) Veröffentlichungstag und Bekanntmachung des Hinweises auf die Patenterteilung:
**04.12.2002 Patentblatt 2002/49**

(21) Anmeldenummer: **98928258.7**

(22) Anmeldetag: **13.05.1998**

(51) Int Cl.[7]: **A01N 47/24**, A01N 37/50, A01N 37/06
// (A01N47/24, 37:50, 37:06), (A01N37/50, 47:24, 37:06)

(86) Internationale Anmeldenummer:
**PCT/EP98/02820**

(87) Internationale Veröffentlichungsnummer:
**WO 98/052417 (26.11.1998 Gazette 1998/47)**

# (54) FUNGIZIDE MISCHUNGEN

FUNGICIDAL MIXTURES

MELANGES FUNGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **22.05.1997 DE 19721402**
**22.05.1997 DE 19721401**

(43) Veröffentlichungstag der Anmeldung:
**08.03.2000 Patentblatt 2000/10**

(73) Patentinhaber: **BASF AKTIENGESELLSCHAFT**
**67056 Ludwigshafen (DE)**

(72) Erfinder:
- **SCHELBERGER, Klaus**
**D-67161 Gönnheim (DE)**
- **SCHERER, Maria**
**D-76829 Landau (DE)**
- **SAUTER, Hubert**
**D-68167 Mannheim (DE)**
- **MÜLLER, Bernd**
**D-67227 Frankenthal (DE)**
- **BIRNER, Erich**
**D-67317 Altleiningen (DE)**
- **LEYENDECKER, Joachim**
**D-68526 Ladenburg (DE)**
- **AMMERMANN, Eberhard**
**D-64646 Heppenheim (DE)**
- **LORENZ, Gisela**
**D-67434 Neustadt (DE)**
- **STRATHMANN, Siegfried**
**D-67117 Limburgerhof (DE)**
- **SAUR, Reinhold**
**D-67459 Böhl-Iggelheim (DE)**

(56) Entgegenhaltungen:
**WO-A-96/01258**
**WO-A-97/40688**
**WO-A-98/01033**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 982 994 B1

Printed by Jouve, 75001 PARIS (FR)

## Beschreibung

Die vorliegende Erfindung betrifft eine fungizide Mischung, welche

$a_1$) ein Phenyl-benzyletherderivat der Formel I.a, I.b oder I.c,

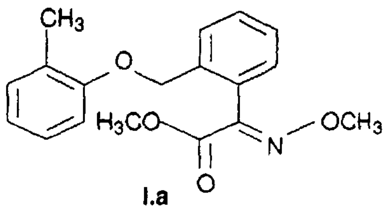

I.a

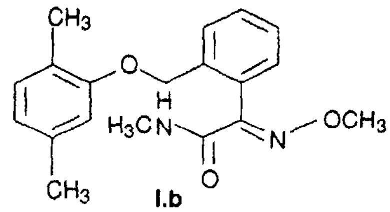

I.b

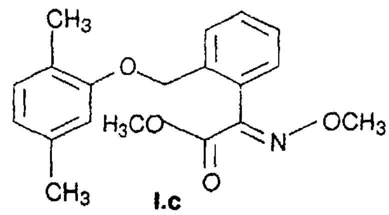

I.c

und/oder

$a_2$) ein Carbamat der Formel Id,

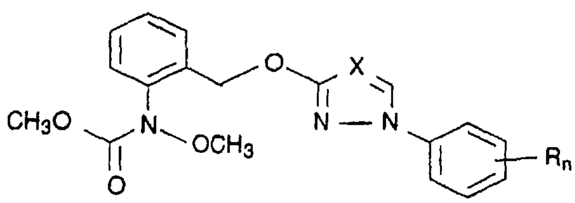

(I)

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, eines seiner Salze oder Addukte, sowie sowie

b) ein Dinitrophenolderivat der Formel II.a oder II.b

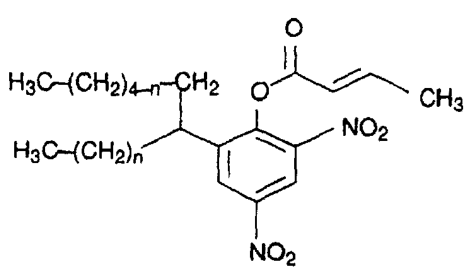

II.a

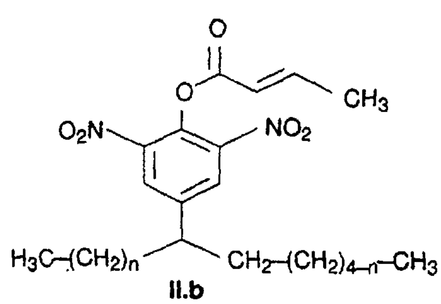

II.b

in der n für 0, 1 oder 2 steht,
in einer synergistisch wirksamen Menge

Außerdem betrifft die Erfindung Verfahren zur Bekämpfung von Schadpilzen mit Mischungen der Verbindungen I (I.a, I.b bzw. I.c) und II (II.a bzw. II.b) und die Verwendung der Verbindung I und der Verbindung II zur Herstellung

derartiger Mischungen.

Die Verbindungen der Formel Ia-c, ihre Herstellung und ihre Wirkung gegen Schadpilze sind aus der Literatur bekannt (EP-A 253 213; EP-A 254 426; EP-A 398 692).

Die Verbindungen der Formel Id, ihre Herstellung und ihre Wirkung sind aus der WO-A 93/15046, WO-A 96/01256 und WO-A 96/01258 bekannt.

Ebenfalls bekannt ist die Mischung der Verbindungen II (II.a und II.b) (common name: Dinocap), deren Herstellung und deren Wirkung gegen Schadpilze und Spinnentiere (US-A 2,526,660; US-A 2,810,767).

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindung I und der Verbindung II oder bei Anwendung der Verbindung I und der Verbindungen II nacheinander Schadpilze besser bekämpfen lassen, als mit den Einzelverbindungen allein.

Die Formel Id repräsentiert insbesondere Carbamate, in denen die Kombination der Substituenten einer Zeile der folgenden Tabelle entspricht:

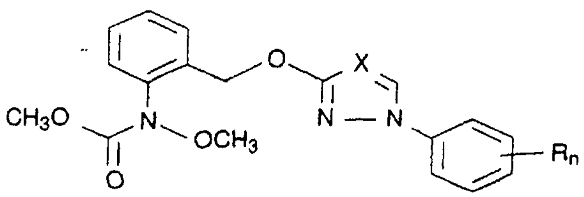

(I)

| Nr. | X | $R_n$ |
|---|---|---|
| I.1 | N | 2-F |
| I.2 | N | 3-F |
| I.3 | N | 4-F |
| I.4 | N | 2-Cl |
| I.5 | N | 3-Cl |
| I.6 | N | 4-Cl |
| I.7 | N | 2-Br |
| I.8 | N | 3-Br |
| I.9 | N | 4-Br |
| I.10 | N | $2\text{-}CH_3$ |
| I.11 | N | $3\text{-}CH_3$ |
| I.12 | N | $4\text{-}CH_3$ |
| I.13 | N | $2\text{-}CH_2CH_3$ |
| I.14 | N | $3\text{-}CH_2CH_3$ |
| I.15 | N | $4\text{-}CH_2CH_3$ |
| I.16 | N | $2\text{-}CH(CH_3)_2$ |
| I.17 | N | $3\text{-}CH(CH_3)_2$ |
| I.18 | N | $4\text{-}CH(CH_3)_2$ |
| I.19 | N | $2\text{-}CF_3$ |
| I.20 | N | $3\text{-}CF_3$ |

(fortgesetzt)

| Nr. | X | $R_n$ |
|---|---|---|
| I.21 | N | $4-CF_3$ |
| I.22 | N | $2,4-F_2$ |
| I.23 | N | $2,4-Cl_2$ |
| I.24 | N | $3,4-Cl_2$ |
| I.25 | N | $2-Cl, 4-CH_3$ |
| I.26 | N | $3-Cl, 4-CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |
| I.33 | CH | 2-Br |
| I.34 | CH | 3-Br |
| I.35 | CH | 4-Br |
| I.36 | CH | $2-CH_3$ |
| I.37 | CH | $3-CH_3$ |
| I.38 | CH | $4-CH_3$ |
| I.39 | CH | $2-CH_2CH_3$ |
| I.40 | CH | $3-CH_2CH_3$ |
| I.41 | CH | $4-CH_2CH_3$ |
| I.42 | CH | $2-CH(CH_3)_2$ |
| I.43 | CH | $3-CH(CH_3)_2$ |
| I.44 | CH | $4-CH(CH_3)_2$ |
| I.45 | CH | $2-CF_3$ |
| I.46 | CH | $3-CF_3$ |
| I.47 | CH | $4-CF_3$ |
| I.48 | CH | $2,4-F_2$ |
| I.49 | CH | $2,4-Cl_2$ |
| I.50 | CH | $3,4-Cl_2$ |
| I.51 | CH | $2-Cl, 4-CH_3$ |
| I.52 | CH | $3-Cl, 4-CH_3$ |

Besonders bevorzugt werden die Verbindungen I.12, I.23, I.32 und I.38.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zukkerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudocercosporella-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 10:1 bis 0,01:1, vorzugsweise 5:1 bis 0,05:1, insbesondere 1:1 bis 0,05:1 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,05 bis 1,0 kg/ha.

Die Aufwandmengen für die Verbindungen II liegen entsprechend bei 0,01 bis 10 kg/ha, vorzugsweise 0,05 bis 5 kg/ha, insbesondere 0,1 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta - und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen ließ sich durch die folgenden Versuche zeigen:

Die Wirkstoffe wurden getrennt oder gemeinsam als 10 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Beispiel 1

Wirksamkeit gegen Weizenmehltau

Blätter von in Töpfen gewachsenen Weizenkeimlingen der Sorte "Frühgold" wurden mit wäßriger Wirkstoffaufbereitung, die aus einer Stammlösung bestehend aus 10 % Wirkstoff, 63 % Cyclohexanon und 27 % Emulgiermittel angesetzt wurde, bis zur Tropfnäße besprüht und 24 Stunden nach dem Antrocknen des Spritzbelages mit Sporen des Weizenmehltaus (Erysiphe graminis forma specialis tritici) bestäubt. Die Versuchspflanzen wurden anschließend im Gewächshaus bei Temperaturen zwischen 20 und 24°C und 70 bis 90 % relativer Luftfeuchtigkeit aufgestellt. Nach 7 Tagen wurde das Ausmaß der Mehltauentwicklung visuell in % Befall der gesamten Blattfläche ermittelt.

Die Auswertung erfolgte durch Feststellung der befallenen Blattflächen in Prozent. Diese Prozent-Werte wurden in Wirkungsgrade umgerechnet. Der Wirkungsgrad (**W**) wurde nach der Formel von Abbot wie folgt bestimmt:

$$W = (1 - \alpha)\cdot 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Die Ergebnisse der Wirksamkeit gegen Weizenmehltau sind den nachfolgenden Tabellen zu entnehmen

| Bsp. | Wirkstoff | Wirkstoffkonzentration in der Spritzbrühe in ppm | Wirkungsgrad in % der unbehandelten Kontrolle |
|---|---|---|---|
| 1V | Kontrolle (unbehandelt) | (100 % Befall) | 0 |
| 2V | Ia | 0,6<br>0,3 | 0<br>0 |
| 3V | Ib | 0,6<br>0,3 | 15<br>15 |
| 4V | Verbindung<br>I.32 (Id) | 0,63<br>0,31 | 75<br>40 |
| 5V | IIa | 12,5<br>6,3<br>3,1 | 10<br>0<br>0 |

Tabelle 3

| Bsp. | erfindungsgemäße Mischung | beobachteter Wirkungsgrad | berechneter Wirkungsgrad*) |
|---|---|---|---|
| 6 | 0,6 ppm Ia<br>+<br>12,5 ppm IIa | 40 | 10 |
| 7 | 0,3 ppm Ia<br>+<br>12,5 ppm IIa | 40 | 10 |
| 8 | 0,6 ppm Ib<br>+<br>12,5 ppm IIa | 85 | 23,5 |
| 9 | 0,3 ppm Ib<br>+<br>12,5 ppm IIa | 80 | 23,5 |
| 10 | 0,63 ppm Id<br>+<br>6,3 ppm IIa | 95 | 75 |
| 11 | 0,31 ppm Id<br>+<br>3,1 ppm IIa | 80 | 40 |

*) berechnet nach der Colby-Formel

Aus den Ergebnissen des Versuches geht hervor, daß der beobachtete Wirkungsgrad in allen Mischungsverhältnissen höher ist, als nach der Colby-Formel vorausberechnete Wirkungsgrad.

## Patentansprüche

**1.** Fungizide Mischung, enthaltend

$a_1$) ein Phenyl-benzyletherderivat der Formel I.a, I.b oder I.c,

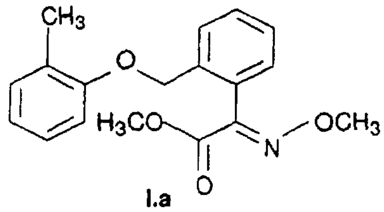
I.a

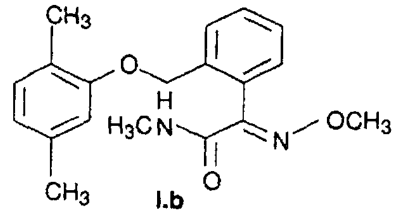
I.b

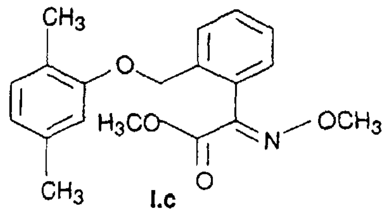
I.c

und/oder

$a_2$) ein Carbamat der Formel Id,

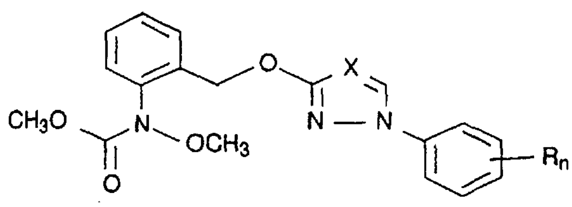
(I)

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, eines seiner Salze oder Addukte, sowie

b) ein Dinitrophenolderivat der Formel II.a oder II.b

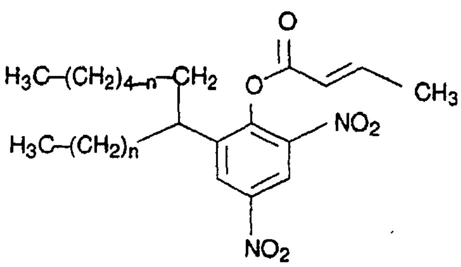
II.a

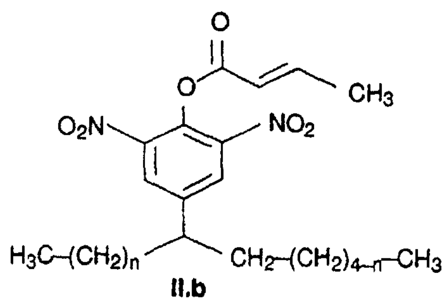
II.b

in der n für 0, 1 oder 2 steht,
in einer synergistisch wirksamen Menge.

2. Fungizide Mischung nach Anspruch 1, **dadurch gekennzeichnet, daß** das Gewichtsverhältnis der Verbindung I, zu der Verbindung II 10:1 bis 0,01:1 beträgt.

3. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I, gemäß Anspruch 1 und einer Verbindung der Formel II gemäß Anspruch 1 behandelt.

4. Verfahren nach Anspruch 3, **dadurch gekennzeichnet, daß** man eine Verbindung I gemäß Anspruch 1 und eine

Verbindung II gemäß Anspruch 1 gleichzeitig, und zwar gemeinsam oder getrennt, oder nacheinander ausbringt.

**5.** Verfahren nach Anspruch 3 oder 4, **dadurch gekennzeichnet, daß** man die Verbindung I gemäß Anspruch 1 in einer Menge von 0,01 bis 2,5 kg/ha aufwendet.

**6.** Verfahren nach den Ansprüchen 3 bis 5, **dadurch gekennzeichnet, daß** man die Verbindung II gemäß Anspruch 1 in einer Menge von 0,01 bis 10 kg/ha aufwendet.

**7.** Verwendung einer Verbindung I gemäß Anspruch 1 zur Herstellung einer fungizid wirksamen synergistischen Mischung gemäß Anspruch 1.

**8.** Verwendung einer Verbindung II gemäß Anspruch 1 zur Herstellung einer fungizid wirksamen synergistischen Mischung gemäß Anspruch 1.

**9.** Mittel nach Anspruch 1, das in zwei Teilen konditioniert ist, wobei der eine Teil eine Verbindung der Formel I gemäß Anspruch 1 in einem festen oder flüssigen Träger enthält und der andere Teil eine Verbindung der Formel II gemäß Anspruch 1 in einem festen oder flüssigen Träger enthält.

## Claims

**1.** A fungicidal mixture comprising

$a_1$) a phenyl benzyl ether derivative of the Formula I.a, I.b or I.c

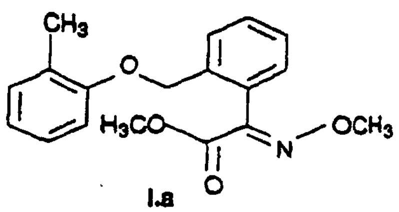

I.a

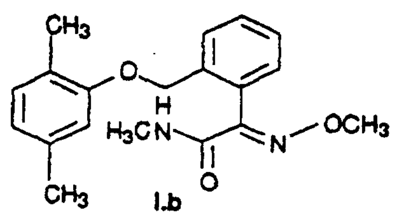

I.b

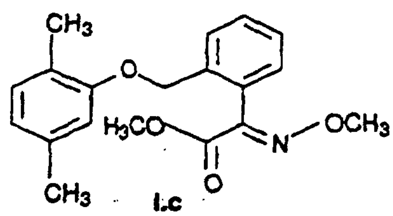

I.c

and/or

$a_2$) a carbamate of the formula Id

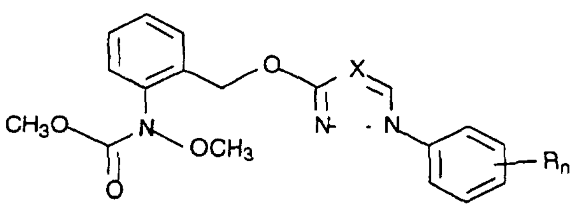

(I)

where X is CH or N, n is 0, 1 or 2 and R is halogen, $C_1$-$C_4$-alkyl or $C_1$-$C_4$-haloalkyl, it being possible for the radicals R to be different if n is 2, or one of its salts or adducts
and

b) a dinitrophenol derivative of the formula II.a or II.b

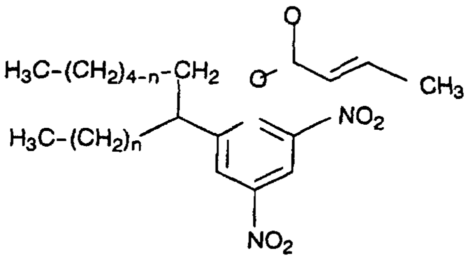

II.a

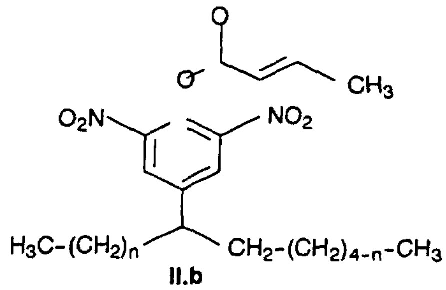

II.b

where n is 0, 1 or 2
in a synergistically effective amount.

**2.** A fungicidal mixture as claimed in claim 1, wherein the weight ratio of the compound I to the compound II is from 10:1 to 0.01:1.

**3.** A method for controlling harmful fungi, which comprises treating the harmful fungi, their habitat, or the plants, seeds, soils, areas, materials or spaces to be kept free from them with a compound of the formula I as set forth in claim 1 and a compound of the formula II as set forth in claim 1.

**4.** A method as claimed in claim 3, wherein a compound I as set forth in claim 1 and a compound II as set forth in claim 1 are applied simultaneously, that is to say separately as well as together, or in succession.

**5.** A method as claimed in claim 3 or 4, wherein the compound I as set forth in claim 1 is applied in an amount of from 0.01 to 2.5 kg/ha.

**6.** A method as claimed in any of claims 3 to 5, wherein the compound II as set forth in claim 1 is applied in an amount of from 0.01 to 10 kg/ha.

**7.** The use of a compound I as set forth in claim 1 for preparing a fungicidally effective synergistic mixture as claimed in claim 1.

**8.** The use of a compound II as set forth in claim 1 for preparing a fungicidally effective synergistic mixture as claimed in claim 1.

**9.** A composition as claimed in claim 1 which is conditioned in two parts, one part comprising a compound of the formula I as set forth in claim 1 in a solid or liquid carrier and the other part comprising a compound of the formula II as set forth in claim 1 in a solid or liquid carrier.

## Revendications

**1.** Mélange fongicide, contenant

$a_1$) un dérivé d'éther-oxyde de phényle et de benzyle de formule I.a, I.b ou I.c,

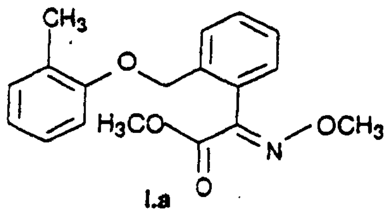
I.a

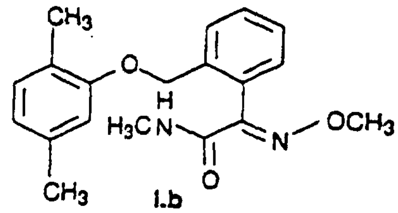
I.b

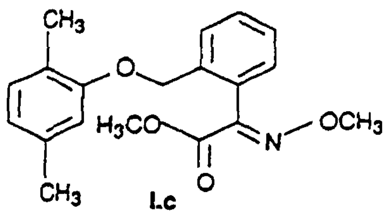
I.c

et/ou

a2) un carbamate de formule Id,

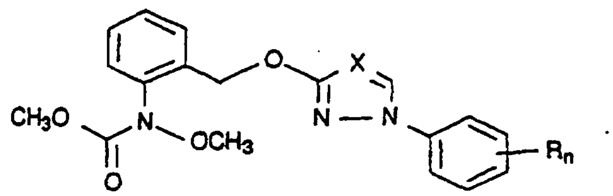
(I)

où X représente CH et N, n vaut 0, 1 ou 2, et R désigne un halogène, un alkyle en $C_1$-$C_4$ et un halogénoalkyle en $C_1$-$C_4$, tandis que les restes R peuvent être différents quand n vaut 2, ou l'un de ses sels ou produits d'addition,
ainsi que

b) un dérivé de dinitrophénol de formule II.a ou II.b

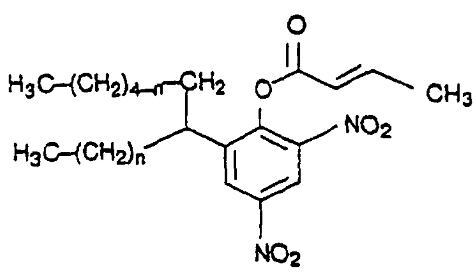
II.a

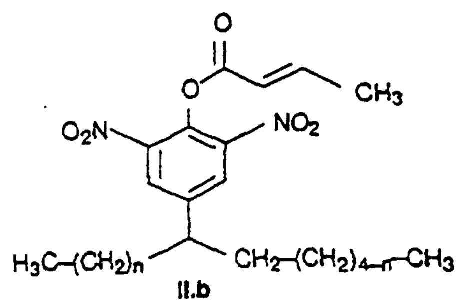
II.b

où n vaut 0, 1 ou 2,
en une quantité synergiquement efficace.

2. Mélange fongicide selon la revendication 1, **caractérisé par le fait que** le rapport en poids du composé I au composé II vaut 10:1 à 0,01:1.

3. Procédé pour la lutte contre les champignons nuisibles, **caractérisé par le fait qu'**on traite les champignons nuisibles, leur biotope ou les plantes, semences, sols, surfaces, matières ou espaces à maintenir exempts de tels champignons, avec un composé de formule I selon la revendication 1 ou un composé de formule II selon la revendication 1.

4. Procédé selon la revendication 3, **caractérisé par le fait qu'**on applique un composé I selon la revendication 1 et un composé II selon la revendication 1 simultanément, et dans ce cas conjointement ou séparément, ou l'un après l'autre.

5. Procédé selon la revendication 3 ou 4, **caractérisé par le fait qu'**on utilise le composé I selon la revendication 1 en une quantité de 0,01 à 2,5 kg/ha.

6. Procédé selon les revendications 3 à 5, **caractérisé par le fait qu'**on utilise le composé II selon la revendication 1 en une quantité de 0,01 à 10 kg/ha.

7. Utilisation d'un composé I selon la revendication 1 pour la préparation d'un mélange synergique à activité fongicide selon la revendication 1.

8. Utilisation d'un composé II selon la revendication 1 pour la préparation d'un mélange synergique à activité fongicide selon la revendication 1.

9. Produit selon la revendication 1, qui est conditionné en deux parties, tandis qu'une partie contient un composé de formule I selon la revendication 1 dans un support solide ou liquide et l'autre partie contient un composé de formule II selon la revendication 1 dans un support solide ou liquide.